# EUROPEAN PATENT SPECIFICATION

(11) **EP 2 248 451 B1**
(45) Date of publication and mention of the grant of the patent: **05.09.2012**
(21) Application number: 09173616.5
(22) Date of filing: 21.10.2009
(51) Int. Cl.: A47J 31/36

(54) **Infusion group**
Infusionsgruppe
Groupe de perfusion

(30) Priority: 04.03.2009 IT BS20090035
(43) Date of publication of application: 10.11.2010
(73) Proprietor: Capitani S.r.l., 22070 Solbiate (CO) (IT)
(72) Inventor: Capitani, Emilio, I-22070, Albiolo, Como (IT)
(74) Representative: Chimini, Francesco

(56) References cited:
- EP-A1- 1 721 553
- US-A- 5 776 527

## Description

The present invention relates to an infusion group, for example for coffee machines of the type functioning with pods or capsules containing aromatic essences.

Many infusion groups for coffee machines are known of in the art, such as described in US 5 776 527 A. Such devices usually comprise a male infusor, which supplies an extraction fluid, and a female infusor.

The pod, containing the aromatic essence, is transported inside the female infusor, in the so-called infusion chamber, so that the extraction of the aromatic essence is performed by the male infusor.

To such purpose, the devices of the known art comprise means of receiving and moving the pod which enable the correct receipt, alignment and insertion in the infusion chamber and expulsion from the infusion chamber upon completion of dispensing of the drink.

In a previous application by the same applicant, an infusion group was described comprising a female infusor and a male infusor, at least one of which was mobile in relation to the other between a rearward, inactive position and a forward, functioning position, and a pod-holder carriage moveable between at least a first position, of inserting the pod in its respective seat in the carriage, and a second position, of releasing the pod into the infusion chamber.

During functioning of the infusion group, the pod-holder carriage stops in the position where the pod is released into the infusion chamber. The carriage has a central aperture which allows the used pod to drop from the infusion chamber into a container below. The mobile infusor, in its return movement towards the rearward, inactive position, engages in the carriage making it too move back to the starting position. In an alternative embodiment, the carriage is released from its advanced position by manually acting on it.

It has been seen however, that in some cases the used pod falls from the infusion chamber precisely in the moment in which the carriage is returning to the starting position, with the result that the pod remained caught between the carriage and the mobile infusor, causing jamming of the group.

The purpose of the present invention is to propose an infusion group able to overcome the drawback complained of above.

Another purpose of the invention is to make available an infusion group of the type described above, but with a simpler, more compact structure and more efficient functioning.

Such purposes are achieved by an infusion group according to claim 1.

Further advantages may also be achieved by means of the supplementary characteristics of the dependent claims.

Preferred embodiments of the infusion group according to the present invention will now be described in detail, with the help of the attached figures, wherein:

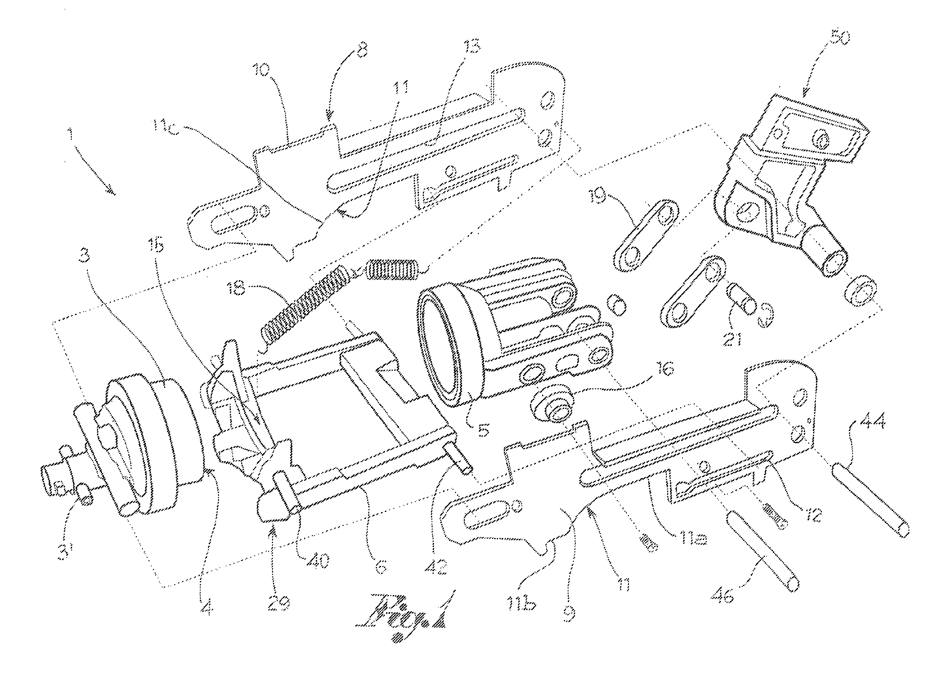

- figure 1 shows an exploded perspective view of an infusion group according to the invention;

- figures 2-4 show the group in figure 1 assembled and in the same number of functioning phases;

- figures 5-7 show the infusion group in an embodiment variation and in three phases of functioning.

With reference to such figures, reference numeral 1 denotes, in its entirety, an infusion group, for example for coffee machines of the type functioning with pods or capsules containing aromatic essences.

The infusion group 1 comprises a female infusor 3 which defines an infusion chamber 4 able to accommodate a pod or capsule 25 for la production of an infused drink, and a male infusor 5, able to act in conjunction with the female infusor 3 so as to at least partially close said chamber 4.

At least one of the male 5 and female 3 infusors is mobile in relation to the other along a translation axis X between an inactive, rearward position, able to receive a pod 25, and a working, forward position in which the pod is inserted in the infusion chamber 4 for the production of the drink.

Preferably, it is the male infusor 5 which is moveable along such translation axis X.

According to a preferred embodiment, at least one adduction pipe 3' for one cup of an infused drink extends from the female infusor 3.

The infusion group 1 comprises then a device to accommodate and move the pod 25.

Specifically, the aforesaid device accommodating and moving the pod, comprises a pod-holder carriage 6. Said carriage 6 presents, in its front portion 29, a seat 15 able to receive the pod 25. For example, the pod 25 has, on the top, an external crown 26 and the seat 15 has a recess in which it engages said external crown 26.

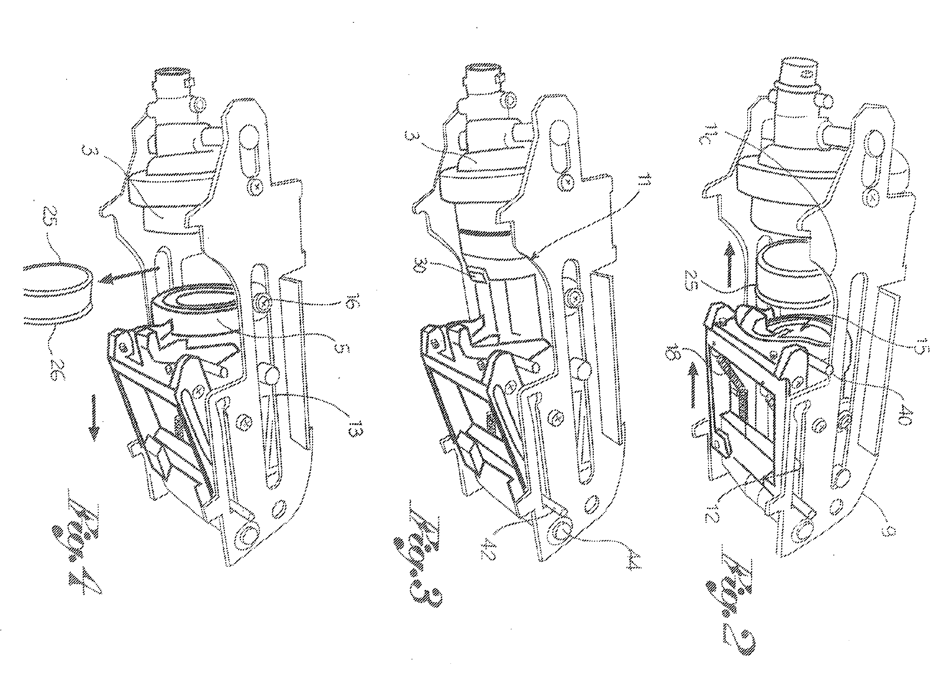

The pod-holder carriage 6 essentially moveable along said translation axis X at least between a first position, of inserting the pod 25 in a respective seat 15 made in the carriage, and a second position, of releasing the pod 25 into the infusion chamber 4. According to one embodiment shown in figures 2-4, the first position is, similarly to the positions of the mobile infusor, a rearward position, while the second position is a forward position.

The carriage 6, when in said first rearward position, is distanced from the infusion chamber 4 so as to permit expulsion of the used pod from the infusion chamber into a collection tray below (not shown).

Joined to the pod-holder carriage 6 are return means 18 able to return the carriage to the first position automatically upon reaching the second position. In other words, the carriage is returned to the rearward starting position only by means of the return means 18 which perform their action of inverting the movement of the carriage only when this has essentially reached the second or forward position, and without manual intervention on the carriage or by means of the mobile infusor.

According to one embodiment, the mobile infusor 5 and the pod-holder carriage 6 may be operatively connected to each other so as to allow the movement of the carriage at least between the first and the second position following shifting of the mobile infusor. In other words, while during the return phase the mobile infusor and the carriage move in an entirely independent manner, during the phase of loading the pod in the infusion chamber the mobile infusor drags the carriage as it shifts. Advantageously therefore, no special command mechanisms are needed for the advancement of the carriage.

Advantageously, the mobile infusor 5 has a thrust tooth 30 able to engage in the pod-holder carriage 6.

According to a preferred embodiment, the return means 18 of the carriage are calibrated so as to cause the disengagement of the carriage from the mobile infusor when the carriage reaches the second position. For example, the said return mechanism comprises at least one elastic element 18 connected to the carriage 6 so as to be placed in traction or compression by the movement of the carriage.

According to one embodiment, known the stroke of the carriage, the elastic element 18, for example a spring, is chosen so as to exert increasing force on the carriage in relation to the movement of the carriage, but not such as to render moving forward of the mobile infusor by the user difficult.

According to one embodiment, when the carriage reaches the forward position, the return means 18 exert a force such as to overcome the coupling force between the mobile infusor and the carriage, freeing the latter and automatically returning it, with a trigger movement, in other words extremely rapid, to the rearward starting position.

Advantageously, the coupling system between the mobile infusor and the carriage is also chosen so as to yield if subjected to a force higher than a predefined threshold and having a component facing the uncoupling direction.

According to one embodiment, when the carriage 6 is near the forward position, its front part 29 at least inclines so as to allow the mobile infusor 5 to introduce the pod into the infusion chamber 4. In other words, near said forward position the seat 15 for the pod is deviated from the translation axis (X) to enable the release of the pod 25 into the infusion chamber 4.

In this embodiment, advantageously, the disengagement of the carriage 6 from the mobile infusor 5 takes place thanks to the downward inclination of the front part 29 of the carriage. For example, such inclination is sufficient to cause the disengagement of the carriage from the tooth 30 of the mobile infusor. As soon as such disengagement takes place, the return mechanisms 18 automatically cause the return of the carriage to the starting position.

According to one embodiment, the infusion group comprises a support frame 8 comprising a pair of lateral metallic plates 9, 10 which contain at least the male 5 and female 3 infusors and the pod-holder carriage 6. In such metallic plates there are guide means 11-13 for the translation of the mobile infusor and of the pod-holder carriage 6.

According to one embodiment, in at least one of said lateral plates 9, 10 (preferably in both) there is a drive cam 11, for example in the form of a shaped rim or slot, which engages a first transversal pin or peg 40 extending from a front portion 29 of the pod-holder carriage to enable the guided advancement and rearward movement of said carriage. Said drive cam 11 comprises a curved or inclined section 11c which extends mainly in an inclined direction in relation to the translation axis X.

For example, the inclined section takes a curved or rectilinear direction incident to the axis X. According to one embodiment, the inclined section 11c is preceded by an initial section 11a and terminates in a final section 11b, essentially parallel to the translation axis X. Such initial and terminal sections of the slot 11 permit a fluid, continuous movement of the pod-holder carriage 6 without sticking.

In addition, in at least one of the lateral plates 9, 10 of the frame (preferably in both) there is a first guide slot 12 extending in an essentially rectilinear direction parallel to the primary translation axis X, said slot being engaged by a second transversal pin 42 extending from a rear portion of the pod-holder carriage 6 to allow the guided advancement or backward movement of said carriage.

According to one embodiment, in at least one of the lateral plates 9, 10 (preferably in both) there is a second rectilinear guide slot 13 engaging a lateral portion of the male infusor.

In one embodiment, the male infusor 5 is fluidly fed by means of a feed duct which connects to the male infusor by means of a connection 16 which passes through said second guide slot 13.

For the movement of the mobile infusor, the infusion group 1 comprises means of operation which can operate manually. In a preferred embodiment, said means of operation comprise a double joint lever 50 oscillating around a first shaft 44 extending between the rear extremities of the lateral plates 9, 10 of the support frame. The lever is connected to the male infusor 5 by means of at least one oscillating arm 19 (preferably two), pivoted to the lever 50 by a pin 21. The male infusor 5 and the oscillating arms 19 are connected by a second oscillation shaft 46 which extends between the lateral plates of the frame and which slides along the second rectilinear guidance slot 13.

In one embodiment variation, the means of operating of the male infusor 5 comprise a cam lever.

According to one embodiment wherein the mobile element is the male infusor 5, the female infusor 3 is blocked between the extremities of the plates 9, 10, for example by screws.

According to an embodiment variation, the support frame with the guide means 11-13 is made as a single block body, preferably in plastic, obtained by moulding.

In the embodiment described above, the return means 18 connect the pod-holder carriage 6 to the fixed support frame so as to be placed under tension when the carriage is pushed into the forward position, that is towards the infusion chamber. When the mobile infusor reaches the limit position, the return mechanisms automatically return the carriage to its rearward starting position, away from the infusion chamber. Consequently when dispensing of the drink is completed and the mobile infusor is made to move backwards, the carriage is already in its starting position and the pod is free to drop into the tray below.

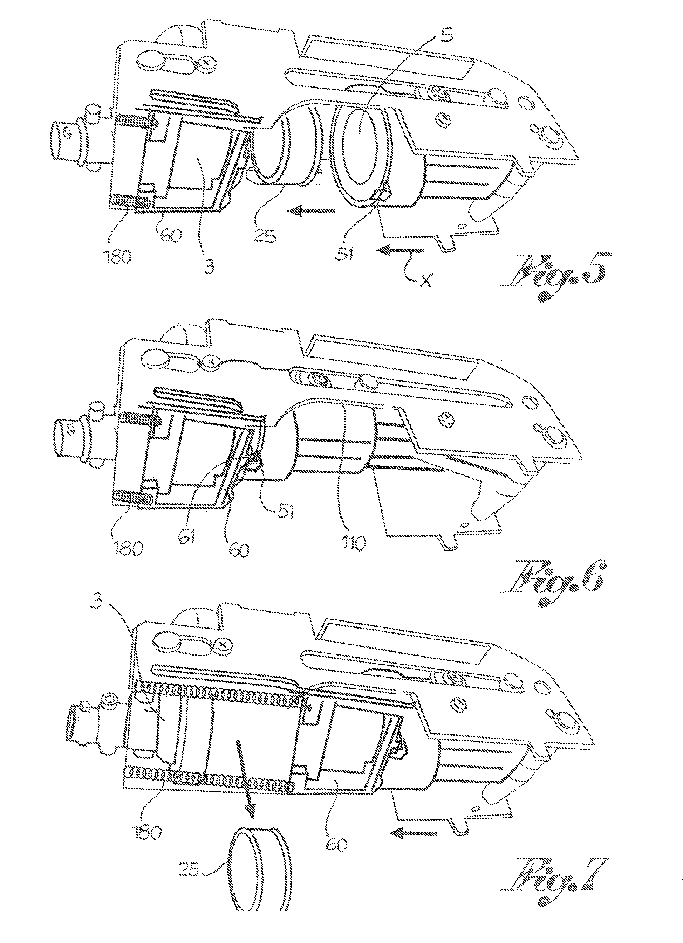

According to one embodiment shown in figures 5-7, the return means 180 of the pod-holder carriage 60 are attached to the front part of the support frame, that is on the side of the fixed infusor 3. In this embodiment, the carriage 60 extends, when in the rest position, essentially under the infusion chamber and presents the seat 15 accommodating the pod or capsule facing the infusion chamber and distanced from it only as much as needed to allow the positioning of a pod or capsule in the relative seat (figure 5). Similarly to the embodiment previously described, the carriage and the mobile infusor are provided with engagement devices thanks to which the mobile infusor, advancing towards the infusion chamber, hooks up the carriage and drags it to a forward position of release into the infusion chamber (Figure 6). Advantageously, in this case too, the front part of the carriage inclines when it finds itself in such forward position.

In this embodiment, when dispensing of the drink is completed and the mobile infusor 5 is made to move backwards towards the starting position, it also drags the carriage backwards (Figure 7). To such purpose, further hooking devices 51, 61 are provided on the mobile infusor 5 and on the carriage 60 which interact with each other when the mobile infusor moves backwards from the forward limit position.

The movement to a rearward position, in other words away from the infusion chamber, causes putting into tension of the return means 180, for example comprising elastic elements. When the mobile infusor is near the starting position, the carriage 60 has completely freed the area under the infusion chamber and the used pod or capsule 25 is therefore free to drop into the container. When the mobile infusor reaches the starting position, the return means 180 automatically bring the carriage back to its starting position, towards the infusion chamber. To such purpose, advantageously, the support frame has a drive cam 110 able to cause disengagement of the carriage from the mobile infusor, for example inclining its extremity bearing the hooking element 61 of the carriage 60 to the mobile infusor.

In any case, when the used capsule or pod is expelled from the infusion chamber, the carriage is in a position distant from the infusion chamber, preventing the risk of the group jamming. The return movement of the carriage to the starting position is automatic and does not require a specific manoeuvre by the user.

In addition, the carriage may be made in a simpler, more compact manner, given that a central aperture for the transit of the used pod or capsule is no longer needed.

Advantageously, the infusor group 1 with the metal plate frame, made for example by punching, makes it possible to make the attachment and guide elements of the infusor group with very limited processing tolerances and therefore with maximum precision. As a result, the coupling of the male infusor and the female infusor is always practically perfect, thus constantly ensuring the correct functioning of the machine.

The production of the metal plate frame in addition makes it possible to simplify the production process and assembly, and to make them cheaper.

Advantageously, the infusor group with metallic frame is longer-lasting and therefore less subject to wear, more rigid and therefore able to withstand high levels of stress and pressure without warping, more resistant.

Advantageously, the infusion group is simple to construct and permits large-scale production with lower manufacturing costs.

Advantageously, the infusion group which the present invention relates to requires little maintenance thanks to the absence of delicate components, which would otherwise require periodic calibration and adjustment.

A person skilled in the art may make modifications, adaptations and replacements of elements with others functionally equivalent to the embodiments of the infusion group described above so as to satisfy contingent requirements while remaining within the sphere of protection of the following claims. Each of the characteristics described as belonging to a possible embodiment may be realised independently of the other embodiments described.

## Claims

1. Infusion group (1), for example for coffee machines of the type functioning with pods or capsules (25) containing aromatic essences, comprising:
- a female infusor (3) defining an infusion chamber (4) able to accommodate a pod (25) for the production of an infused drink;
- a male infusor (5) able to co-operate with the female infusor (3) so as to at least partially close said chamber (4);
where at least one of said male (5) and female (3) infusors is mobile in relation to the other along a translation axis (X) between an inactive, rearward position and a working, forward position;
- a pod-holder carriage (6) movable essentially along said translation axis (X) at least between a first position, of inserting the pod (25) in its respective seat (15) in the carriage, and a second position, of release of the pod (25) into the infusion chamber (4), where the carriage, when in said first position, is distanced from the infusion chamber so as to permit the expulsion of the used pod from the infusion chamber into a container underneath,
**characterised by** the fact that return means (18) are associated to the pod-holder carriage for returning the carriage to the first position automatically upon reaching of the second position, regardless of the position of the mobile infusor.

2. Group according to claim 1, wherein the mobile infusor and the pod-holder carriage are operatively connected so as to allow the shifting of the carriage at least between the first and second position following shifting of the mobile infusor.

3. Group according to claim 2, wherein the mobile infusor has a thrust tooth (30) able to engage in the pod-holder carriage.

4. Group according to claim 2 or 3, wherein the return means are calibrated so as to cause the disengagement of the carriage from the mobile infusor when the carriage reaches the second position.

5. Group according to any of the previous claims, wherein said return means comprise at least one elastic element (18) connected to the carriage so as to be placed in traction or compression by the movement of the carriage.

6. Group according to any of the previous claims, wherein near said second position the seat for the pod (15) is deviated from the translation axis (X) to enable the release of the pod (25) into the infusion chamber (4).

7. Group according to any of the previous claims, comprising a support frame (8) in which guide means (11-13) are provided for the translation of the mobile infusor and of the pod-holder carriage (6).

8. Group according to claim 7, wherein said support frame (8) comprises a pair of lateral metal plates (9, 10) which contain at least the male (5) and female (3) infusors and the pod-holder carriage (6) and in which said guide means are made (11-13), in at least one of said lateral plates (9, 10) there being a drive cam (11) which engages a first transversal pin extending from a front portion of the pod-holder carriage to enable the guided advancement and backward movement of said carriage, said drive cam comprising a curved or inclined section (11c) which extends mainly along a curved or inclined direction in relation to the translation axis (X).

9. Group according to claim 8, wherein in at least one of the lateral plates (9,10) of the frame there is a first guide slot (12) extending in an essentially rectilinear direction parallel to the primary translation axis (X), said slot being engaged by a second transversal pin extending from a rear portion of the pod-holder carriage (6) to allow the guided advancement or backward movement of said carriage.

10. Group according to the previous claim, wherein in at least one of the lateral plates (9, 10) there is a second rectilinear guide slot (13) engaging a lateral portion of the male infusor.

11. Group according to the previous claim, wherein the male infusor is fluidly fed by means of a feed duct which connects to the male infusor by means of a connection (16) which passes through said second guide slot.

12. Group according to any of the previous claims, comprising, in addition, driving means which can be activated manually for the advancement or backward movement of the male infusor.

13. Group according to claim 12, wherein said driving means comprise a double joint lever (50) oscillating around a first shaft (44) extending between the rear extremities of the lateral plates of the support frame and connected to the male infusor by means of at least one oscillating arm (19), the male infusor and said oscillating arm being connected by a second oscillation shaft (46) which extends between the lateral plates of the frame and which slides along the second rectilinear guidance slot.

14. Group according to claim 13, wherein said driving means of the male infusor comprise a cam lever.

## Patentansprüche

1. Aufgussgruppe (1), zum Beispiel für Kaffeemaschinen des mit aromatische Essenzen beinhaltenden Hülsen oder Kapseln (25) arbeitenden Typs, beinhaltend:
- ein weibliches Aufgussstück (3), das eine Aufgusskammer (4) definiert, die zum Aufnehmen einer Hülse (25) zur Herstellung eines Aufgussgetränks geeignet ist,
- ein männliches Aufgussstück (5), das dazu geeignet ist, mit dem weiblichen Aufgussstück (3) zu kooperieren, um so die Kammer (4) zumindest teilweise zu verschließen;
wobei zumindest eines der männlichen (5) und weiblichen (3) Aufgussstücke in Relation zu dem anderen entlang einer Translationsachse (X) zwischen einer inaktiven, rückseitigen Position und einer arbeitenden, vorderseitigen Position beweglich ist;
- einen Hülsenhalterschlitten (6), der im Wesentlichen entlang der Translationsachse (X) beweglich ist zumindest zwischen einer ersten Position zum Einsetzen der Hülse (25) in ihren entsprechenden Sitz (15) in dem Schlitten und einer zweiten Position zum Freigeben der Hülse (25) in die Aufgusskammer (4), wobei der Schlitten, wenn er in der ersten Position ist, von der Aufgusskammer beabstandet ist, um so ein Austreiben der benutzten Hülse aus der Aufgusskammer in einen Container unterhalb zu erlauben, **gekennzeichnet durch** die Tatsache, dass Rückführmittel (18) mit dem Hülsenhalterschlitten bei Erreichen der zweiten Position zum automatischen Zurückführen des Schlittens in die erste Position zugeordnet sind, unabhängig von der Position des mobilen Aufgussstücks.

2. Gruppe nach Anspruch 1, wobei das mobile Aufgussstück und der Hülsenhalterschlitten wirkverbunden sind, um ein Verschieben des Schlittens zumindest zwischen der ersten und zweiten Position nachfolgend auf ein Verschieben des mobilen Aufgussstücks zu erlauben.

3. Gruppe nach Anspruch 2, wobei das mobile Aufgussstück einen gewinkelten Zahn (30) aufweist, der geeignet ist, den Hülsenhalterschlitten zu ergreifen.

4. Gruppe nach Anspruch 2 oder 3, wobei die Rückführungsmittel so kalibriert sind, dass sie ein Loslassen des Schlittens durch das mobile Aufgussstück hervorrufen, wenn der Schlitten die zweite Position erreicht.

5. Gruppe nach einem der vorhergehenden Ansprüche, wobei die Rückführungsmittel zumindest ein elastisches Element (18) aufweisen, das mit dem Schlitten verbunden ist, um so unter Zug oder Kompression durch die Bewegung des Schlittens platziert zu sein.

6. Gruppe nach einem der vorhergehenden Ansprüche, wobei nahe der zweiten Position der Sitz für die Hülse (15) von der Translationsachse (X) abweichend angeordnet ist, um eine Freigabe der Hülse (25) in die Aufgusskammer (4) zu ermöglichen.

7. Gruppe nach einem der vorhergehenden Ansprüche, beinhaltend einen Trägerrahmen (8), in dem Führungsmittel (11-13) vorgesehen sind zur Translation des mobilen Aufgussstücks und des Hülsenhalterschlittens (6).

8. Gruppe nach Anspruch 7, wobei der Trägerrahmen (8) ein paar lateraler Metallplatten (9, 10) aufweist, die zumindest die männlichen (5) und weiblichen (3) Aufgussstücke beinhalten und den Hülsenhalterschlitten (6), und in denen die Führungsmittel ausgebildet sind (11-13), wobei in zumindest einer der lateralen Platten (9, 10) eine Antriebsnocke (11) vorgesehen ist, die einen ersten transversalen Bolzen ergreift, der sich von einem Vorderabschnitt des Hülsenhalterschlittens erstreckt, um die geführte Vorwärts- und Rückwärtsbewegung des Schlittens zu ermöglichen, wobei die Antriebsnocke einen kurvigen oder geneigten Abschnitt (11c) aufweist, der sich im Wesentlichen entlang einer kurvigen oder geneigten Richtung in Relation zu der Translationsachse (X) erstreckt.

9. Gruppe nach Anspruch 8, wobei in zumindest einer der lateralen Platten (9, 10) des Rahmens ein erster Führungsschlitz (12) vorgesehen ist, der sich in einer im Wesentlichen rechtwinkligen Richtung parallel zu der primären Translationsachse (X) erstreckt, wobei der Schlitz durch einen zweiten transversalen Bolzen ergriffen wird, der sich von einem Hinterabschnitt des Hülsenhalterschlittens (6) erstreckt, um eine geführte Vorwärts- oder Rückwärtsbewegung des Schlittens zu ermöglichen.

10. Gruppe nach dem vorhergehenden Anspruch, wobei in zumindest einer der lateralen Platten (9, 10) ein zweiter rechtwinkliger Führungsschlitz (13) vorgesehen ist, der einen lateralen Abschnitt des männlichen Aufgussstücks ergreift.

11. Gruppe nach dem vorhergehenden Anspruch, wobei das männliche Aufgussstück flüssigkeitsgefüllt ist mittels eines Zuflussstutzens, der mit dem männlichen Aufgussstück mittels eines Anschlusses (16) gekoppelt ist, der durch den zweiten Führungsschlitz hindurchführt.

12. Gruppe nach einem der vorhergehenden Ansprüche, zusätzlich beinhaltend Antriebsmittel, die manuell für die Vorwärts- oder Rückwärtsbewegung des männlichen Aufgussstücks aktiviert werden können.

13. Gruppe nach Anspruch 12, wobei die Antriebsmittel einen doppelt gelagerten Hebel (50) aufweisen, der um eine erste Welle (44) oszilliert, die sich zwischen den hinteren Extremitäten der lateralen Platten des Trägerrahmens erstrecken und mit dem männlichen Aufgussstück mittels zumindest eines oszillierenden Arms (19) verbunden sind, wobei das männliche Aufgussstück und der oszillierende Arm durch eine zweite Oszillationswelle (46) verbunden sind, die sich zwischen den lateralen Platten des Rahmens erstreckt und die den zweiten rechtwinkligen Führungsschlitz entlangleitet.

14. Gruppe nach Anspruch 13, wobei die Antriebsmittel des männlichen Aufgussstücks einen Nockenhebel beinhalten.

## Revendications

1. Groupe d'infusion (1), destiné par exemple à des machines à café du type fonctionnant avec des dosettes ou des capsules (25) qui contiennent des essences aromatiques, comprenant :
- un infuseur femelle (3) qui définit une chambre d'infusion (4) capable de recevoir une dosette (25) pour la production d'une boisson infusée ;
- un infuseur mâle (5) capable de coopérer avec l'infuseur femelle (3) de façon à fermer en partie au moins ladite chambre (4) ;
dans lequel l'un au moins dudit infuseur mâle (5) et dudit infuseur femelle (3) est mobile par rapport à l'autre le long d'un axe de translation (X) entre une position inactive vers l'arrière et une position de travail vers l'avant ;
- un chariot porte-dosette (6) mobile sensiblement le long dudit axe de translation (X) au moins entre une première position, d'insertion de la dosette (25) dans son siège respectif (15) dans le chariot, et une seconde position, de libération de la dosette (25) dans la chambre d'infusion (4), dans lequel le chariot, quand il se trouve dans ladite première position, est éloigné de la chambre d'infusion de façon à permettre l'expulsion de la dosette utilisée hors de la chambre d'infusion dans un contenant situé en dessous ;
**caractérisé par le fait que** des moyens de retour (18) sont associés au chariot porte-dosette de façon à faire revenir de manière automatique le chariot vers la première position lorsque la seconde position et atteinte, indépendamment de la position de l'infuseur mobile.

2. Groupe selon la revendication 1, dans lequel l'infuseur mobile et le chariot porte-dosette sont connectés de manière opérationnelle de façon à permettre un décalage du chariot au moins entre la première position et la seconde position après le décalage de l'infuseur mobile.

3. Groupe selon la revendication 2, dans lequel l'infuseur mobile présente une dent de poussée (30) capable de venir en prise avec le chariot porte-dosette.

4. Groupe selon la revendication 2 ou la revendication 3, dans lequel les moyens de retour sont étalonnés de façon à provoquer le dégagement du chariot de l'infuseur mobile lorsque le chariot atteint la seconde position.

5. Groupe selon l'une quelconque des revendications précédentes, dans lequel lesdits moyens de retour comprennent au moins un élément élastique (18) connecté au chariot de façon à être placé en traction ou en compression par le déplacement du chariot.

6. Groupe selon l'une quelconque des revendications précédentes, dans lequel, à proximité de ladite seconde position, le siège de la dosette (15) est dévié de l'axe de translation (X) de façon à permettre la libération de la dosette (25) dans la chambre d'infusion (4).

7. Groupe selon l'une quelconque des revendications précédentes, comprenant un cadre de support (8) dans lequel des moyens de guidage (11 - 13) sont disposés pour une translation de l'infuseur mobile et du chariot porte-dosette (6).

8. Groupe selon la revendication 7, dans lequel ledit cadre de support (8) comprend une paire de plaques métalliques latérales (9, 10) qui contiennent au moins les infuseurs mâle (5) et femelle (3) et le chariot porte-dosette (6) et dans lesquelles sont réalisés lesdits moyens de guidage (11 - 13), et dans l'une au moins desdites plaques latérales (9, 10), il y a une came d'entraînement (11) qui vient en prise avec une première broche transversale qui s'étend à partir d'une partie avant du chariot porte-dosette de façon à permettre un avancement guidé et un déplacement vers l'arrière dudit chariot, ladite came d'entraînement comprenant une section incurvée ou inclinée (11c) qui s'étend principalement le long d'une direction incurvée ou inclinée par rapport à l'axe de translation (X).

9. Groupe selon la revendication 8, dans lequel, dans l'une au moins des plaques latérales (9, 10) du cadre, il y a une première fente de guidage (12) qui s'étend dans une direction sensiblement rectiligne parallèle à l'axe de translation primaire (X), ladite fente étant mise en prise avec une seconde broche transversale qui s'étend à partir d'une partie arrière du chariot porte-dosette (6) de façon à permettre l'avancement guidé ou le déplacement vers l'arrière dudit chariot.

10. Groupe selon la revendication précédente, dans lequel, dans l'une au moins des plaques latérales (9, 10), il y a une seconde fente de guidage rectiligne (13) qui vient en prise avec une partie latérale de l'infuseur mâle.

11. Groupe selon la revendication précédente, dans lequel l'infuseur mâle est alimenté en fluide au moyen d'un conduit d'alimentation qui est connecté à l'infuseur mâle au moyen d'une connexion (16) qui passe à travers ladite seconde fente de guidage.

12. Groupe selon l'une quelconque des revendications précédentes, comprenant, en outre, des moyens d'entraînement qui peuvent être activés de manière manuelle pour l'avancement ou le déplacement vers l'arrière de l'infuseur mâle.

13. Groupe selon la revendication 12, dans lequel lesdits moyens d'entraînement comprennent un levier à double articulation (50) qui oscille autour d'un premier arbre (44) qui s'étend entre les extrémités arrière des plaques latérales du cadre de support et qui est connecté à l'infuseur mâle à l'aide d'un bras oscillant (19) au moins, l'infuseur mâle et ledit bras oscillant étant connectés par un second arbre oscillant (46) qui s'étend entre les plaques latérales du cadre et qui glisse le long de la seconde fente de guidage rectiligne.

14. Groupe selon la revendication 13, dans lequel lesdits moyens d'entraînement de l'infuseur mâle comprennent un levier à came.
